# EUROPEAN PATENT APPLICATION

(11) **EP 1 506 807 A2**
(43) Date of publication of application: **16.02.2005**
(21) Application number: 04018983.9
(22) Date of filing: 10.08.2004
(51) Int. Cl.: B01D 53/26, B01D 69/12, B01D 71/38, B01D 71/68

(54) **Air dehydration membrane**

(30) Priority: 13.08.2003 US 640363; 27.04.2004 US 565949 P
(71) Applicant: Generon IGS, Inc., Houston, Texas 77041 (US)
(72) Inventor: Coan, Frederick L., Antioch California 94509 (US); Jensvold, John A., Benicia California 94510 (US)
(74) Representative: Barker, Rosemary Anne

(57) **Abstract**

An air dehydration membrane is made of a hydrophilic polymer having permeability for water vapor, which is greater than its permeability for air, and having low selectivity between oxygen and nitrogen. The membrane has a hydrophilic coating, which itself may be a polymer. The coating does not affect the selectivity of the coated membrane with respect to oxygen and nitrogen, but does increase selectivity of the membrane with respect to water vapor. Preferred materials for the membrane are polysulfone and polyether sulfone. Preferred materials for the coating are poly vinyl alcohol and Triton X-100. Such air dehydration membranes can be used in a system and method for separating air into components. Compressed air is passed through the dehydration membrane to remove water vapor, before the air flows into a separate gas separation membrane.

## Description

This invention relates to the field of non-cryogenic separation of air into components through the use of polymeric membranes, and provides a membrane useful for removing water vapor from air or other gas streams. The invention also includes a system wherein a polymeric membrane removes water vapor from compressed air to be separated.

It has been known to use gas permeable membranes to separate air into components. A typical membrane system produces two output streams, one of which is oxygen-enriched, and the other of which is oxygen-depleted (i.e. mainly nitrogen). A membrane has the inherent advantage that it does not require energy to operate. A membrane system has no moving parts, and thus requires little or no maintenance.

The motive force for the air passing through the gas-separation membrane comes from the pressure of the air. To move the air through the system, it is necessary to compress the air, so that the air enters the gas separation membrane at higher than ambient pressure. Thus, the first step in a membrane-based air separation process is to compress ambient air. Compressed air is also commonly used to drive pneumatically operated equipment, such as air-driven motors for hand tools, pneumatically operated valves, and the like.

One problem arising from the use of compressed air is that, because there is always at least some water vapor in the air before the compression step, the process of compression tends to produce liquid water. The result is that liquid water, and water vapor become entrained with the compressed air. If the water or water vapor is not removed, it is likely to cause rusting of components, and it may impair the performance of the motor, valve or other component being operated. Moreover, in the case of a pneumatically operated valve, the water may clog the valve. In the case of an air-separation system, the water vapor is likely to condense in the air-separation membrane unit, and also in the carbon bed used to remove hydrocarbon vapors from the air before it enters the membrane.

Compressed gases have other uses, such as in the preservation of perishable materials. In such cases, it is important to avoid condensation which may lead to mildew or mold, in addition to causing corrosion of the equipment.

One prior art solution to the above-described problem is to use a cryogenic system, which refrigerates the air so as to liquefy as much water as possible. The water is preferably cooled to a temperature that is higher than the dewpoint of the air. The air is therefore in a superheated condition, wherein it has a dewpoint slightly above freezing, so that as long as the air temperature remains above the dewpoint, no liquid water will form. A cryogenic system has the obvious disadvantage that it requires the transportation and storage of cryogenic liquids, which inherently consumes energy. Also, the cryogenic liquids must be periodically replenished.

Another solution proposed in the prior art has been the use of a molecular sieve, i.e. a packed bed that absorbs water. But a packed bed has the disadvantages that it is not feasible for use in a continuous process, and that it must be periodically regenerated or replaced when its pores have become filled.

Still another approach to solving the above problem is to provide superheat to the compressed gas. This approach is also expensive, and requires that the air separation system operate at elevated temperatures that are likely to reduce the efficiency and durability of the air separation system. Superheated systems often require the air separation modules to operate at 20° C higher than ambient temperature. In hot locations, the ambient temperature may be over 45° C, requiring that the modules operate at 65° C or higher, to avoid liquid water contamination problems.

Polymeric membranes have long been used in the non-cryogenic separation of components of air. Such membranes have also been used in separating water from air. A membrane has the inherent advantage that it does not require energy to operate. A membrane system has no moving parts, and thus requires little or no maintenance. However, the membrane dryers of the prior art have been less efficient than other drying methods of the prior art.

In general, prior art membranes have shown an efficiency of about 75%, compared with efficiencies of up to about 98% with some prior art techniques.

The present invention provides a membrane, and a method of making the membrane, having substantially improved efficiency in removing water from compressed air. The invention also includes a membrane-based air separation system and method, which use the above-described membrane, wherein water and water vapor are removed from the compressed air to be separated.

### SUMMARY OF THE INVENTION

In one embodiment, the present invention comprises an air dehydration membrane, which is made of a hydrophilic polymer having permeability for water vapor, which is greater than its permeability for air, and wherein the hydrophilic polymer has low selectivity between oxygen and nitrogen. The polymer is coated with another hydrophilic material, which may also be a polymer, the coating being chosen such that the coating does not affect the selectivity of the coated membrane with respect to oxygen and nitrogen, but does increase selectivity of the membrane with respect to water vapor. The membrane is preferably formed as a hollow fiber, and the coating is applied to the bore side of the fiber.

Preferred materials for the hydrophilic polymer used to make the air dehydration membrane include polysulfone and polyether sulfone. Preferred materials for the coatings include poly vinyl alcohol and Triton X-100.

The invention also comprises a method of making an air dehydration membrane. In one embodiment, the method includes forming a polysulfone polymer into a hollow fiber, coating the bore side of the fiber with a solution of poly vinyl alcohol or Triton X-100, and drying the coated fiber. The formation of the fiber is preferably accomplished by mixing polysulfone with a solvent and a non-solvent to form a spin dope, which is then extruded to form the hollow fiber. The solvent and non-solvent are then removed, and the fiber is coated with the polyvinyl alcohol or Triton X-100. The coated fiber is then dried and preferably heat-treated.

In another embodiment, the present invention comprises a method and apparatus for separating air into its primary components, namely nitrogen and oxygen. In its most basic form, the invention uses two distinct membranes connected in series, one being the membrane described above, used for removing water vapor from the compressed air to be separated, and the other for performing the separation of the dried compressed air.

A module containing the air dehydration membrane is positioned upstream of a carbon bed, which removes hydrocarbon vapors from the process stream. The dehydration membrane therefore prevents degradation of the carbon bed by water.

A bypass line, connected across the air dehydration module, provides an alternative path for the compressed air, and thereby makes it possible to control the proportion of the compressed air stream that passes through the dehydration module. In this way, the degree of dryness of the compressed air stream can be controlled.

The present invention therefore has the primary object of providing an air dehydration membrane.

The invention has the further object of providing an air dehydration membrane, which is lower in cost than, and at least as efficient as, dehydration membranes of the prior art.

The invention has the further object of reducing the cost of removing water or water vapor from compressed air streams.

The invention has the further object of providing a membrane-based technology that permits efficient dehydration of air streams.

The invention has the further object of providing a membrane for air dehydration, wherein the membrane is economically advantageous relative to other membranes of the prior art.

The invention has the further object of providing a method of making an air dehydration membrane.

The invention has the further object of providing a method and apparatus for separation of air into components by non-cryogenic means.

The invention has the further object of providing an efficient, non-cryogenic means for drying compressed air before said air enters an air separation module.

The invention has the further object of reducing the cost, and/or improving the efficiency of a membrane-based air separation system.

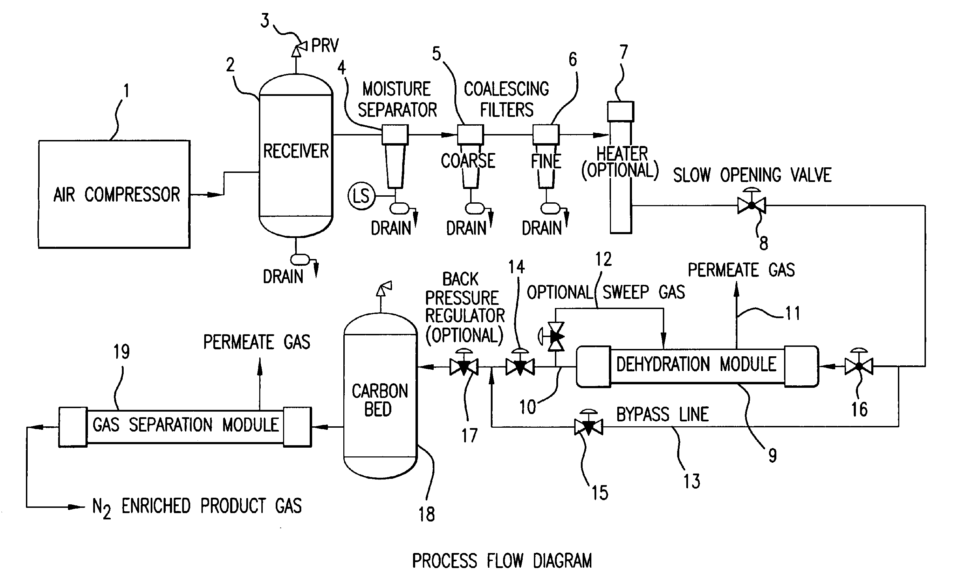

The invention has the further object of reducing the cost of removing water and water vapor from compressed air streams, in an air separation system. The invention has the further object of providing a membrane-based technology that permits efficient dehydration of air streams. The reader skilled in the art will recognize other objects and advantages of the present invention, from a reading of the following brief description of the drawing, the detailed description of the invention, and the appended claims.

### BRIEF DESCRIPTION OF THE DRAWING

The Figure provides a schematic diagram of a non-cryogenic air separation system made according to the present invention, the system including a membrane-based air dehydration module.

### DETAILED DESCRIPTION OF THE INVENTION

The present invention includes a membrane, or a series of membranes, and a process for making such membranes, for use in effectively dehumidifying compressed air. The invention also includes a non-cryogenic method and apparatus for separating air into components, with the aid of the membrane described above.

In its most basic form, the air dehydration membrane of the present invention comprises a porous membrane, preferably having the form of a hollow fiber, the membrane being made of a hydrophilic polymer, which has a hydrophilic coating. The polymer is chosen such that its permeability for water vapor is much greater than its permeability for air.

Preferably, the polymer is such that it still allows air to flow through it, and does not show appreciable selectivity for oxygen relative to nitrogen. The coating is chosen such that the coating does not affect the selectivity of the overall fiber for oxygen and nitrogen, but does increase the selectivity of the fiber for water vapor. The coating may itself be a polymeric material, and preferably has a high molecular weight and a high boiling point.

In one preferred embodiment, the air dehydration membrane is a surfactant-coated polysulfone hollow fiber membrane, or a poly vinyl alcohol-coated polysulfone membrane, or a poly vinyl alcohol-coated polyether sulfone membrane. All of the coatings are applied on the bore side of the membrane.

The air dehydration membranes of the present invention achieve the selective removal of water vapor while not significantly altering the relative concentrations of oxygen and nitrogen found in the feed stream.

The air dehydration membranes of the present invention can be provided as part of a module into which water vapor (saturated or near saturated) and compressed air are introduced. The module produces a dry pressurized product stream (typically having an oxygen concentration within about 1% of 20.9%) and a low pressure permeate stream. The permeate stream contains a mixture of air and the bulk of the water vapor introduced into the module.

Permeated air or a secondary dry sweep stream may be used to optimize the dehydration process. If the membrane were totally efficient in water separation, all the water or water vapor in the feed stream would be removed, and there would be nothing to sweep it out of the system. As the process proceeds, the partial pressure of the water on the bore side becomes lower and lower, and the pressure on the shell-side becomes higher. This pressure difference tends to prevent additional water from being expelled from the module. Since the object is to make the bore side dry, the pressure difference interferes with the desired operation of the device. A sweep stream is therefore used to remove the water or water vapor from the bore side, in part by absorbing some of the water, and in part by physically pushing the water out.

If a sweep stream is used, it may come from an external dry source or a partial recycle of the product stream of the module. In general, the degree of dehumidification will depend on the partial pressure ratio of water vapor across the membrane and on the product recovery (the ratio of product flow to feed flow). Better membranes have a high product recovery at low levels of product humidity and/or higher volumetric product flow rates.

The air dehydration membranes of the present invention are easily made at low cost, and can outperform existing commercial membranes in either volumetric productivity or product recovery.

The air dehydration membrane of the present invention can be spun into a fiber using the techniques described in U.S. Patent No.4,772,392, the disclosure of which is incorporated by reference.

The following examples illustrate the manufacture of the air dehydration membranes of the present invention.

### Example 1

Polysulfide polymer (product number UDEL P-1835, obtained from Solvay Plastics) is combined with tri-ethylene glycol (TEG) and n-methyl-pyrrolidinone (NMP) to form a spin dope that is extruded through a multi-filament hollow fiber die. The range of ratios of solvent (NMP) to non- solvent (TEG) can be from about 2.0 to about 4.0, with 2.5 being the preferred ratio. The polymer concentration range can be from about 40 to about 65% by weight, with 50% by weight being the preferred concentration. Die temperatures can range from about 75° C to about 110° C, with 90° C being the preferred spin temperature. Blowing a core gas through the center of an annular ring die forms the hollow fiber profile. The flow rate of the core gas can range from about 15 to about 30 SCCM, with 24 SCCM being preferred in order to achieve the desired fiber size of about 280 to about 350 microns for the outer diameter, and about 200 to about 250 microns for the inner diameter.

After the fiber is formed as described above, the fiber exits the spin die and is passed through 1) a controlled atmosphere quench zone, 2) a cold quench, and 3) a hot leach, after which the fiber is taken up onto a core.

The quench zone (or "draw zone") uses a quench cabinet to control quench airflow rate, temperature, and humidity. Airflow rates of about 2 to about 7 SCFM are used, with 4 SCFM being preferred. The temperature range is about 5° C to about 25° C, with 12-15° C being preferred. The humidity range is about 35% to about 90% relative humidity, with 80% relative humidity being preferred.

After passing through the quench or draw zone, the fibers entered a low temperature water bath, which comprises the cold quench. This bath sets the fiber and starts the process whereby the entrained solvent and non- solvent are leached out. The temperature range for this low temperature bath is about 3° C to about 15° C, with 4.5° C being preferred. The residence time in the quench bath is less than about 0.5 seconds.

The fibers next passed through a hot water leach bath where a majority of the remaining solvent/non-solvent was removed. The temperature range for the hot water leach bath is about 75° C to about 90° C with 80° C being preferred. The residence time in this bath was less than about 2 seconds. The leach bath includes two sets of driven rollers, wherein each set of rollers can be made to rotate at a different speed. Operating the second, or exit, set of leach bath rollers at a higher speed than the first set allows the fibers to be tensioned or stretched to varying degrees. The speed differential of the rollers used in making the present fiber can range from about 0% to about 20%, with 10% being preferred. The organic levels in both baths (quench and leach) can range from about 0% by weight to about 1% by weight, with a percentage of less than about 0.5% by weight being preferred.

After passing through the leach bath, the fibers were then taken up onto a typical textile fiber core to wait further processing. The fibers may then be woven into a fabric, using a loom, and arranged in modules, as is fully described in U.S. Patent No. 5,598,874, the disclosure of which is incorporated by reference.

Following the weaving process, the fiber was potted into a test module that allows for the pressure isolation of the bore side of the fiber from the shell-side of the fiber. This potting process was done through the use of an epoxy resin to form two tube sheets at either end of the fiber bundle.

The fibers of the test module were then coated with a solution, in water, of 4% PVA (Poly vinyl alcohol, 98-99% hydrolyzed, 31,000-50,000 Mw, supplied by the Aldrich Chemical Company). The coating solution was prepared by first weighing out the PVA and water and then heating the mixture to about 80-90° C for about 2-3 hours, to allow the PVA to dissolve. Once dissolved, the solution was filtered and bore side at 0 to 25 psig. The module was then air dried by passing air through the bore of the fibers.

Once dried, the module can be tested for air dehydration properties. To give enhanced durability, the module is heat treated to about 80-85° C for 5 hours, to crystallize the PVA coating and make it insoluble in water. The coating, drying and heat treatment process may be repeated to give improved performance.

The fiber made according to this Example has an oxygen/nitrogen selectivity of 0.92, which indicates the presence of knudsen flow. The fiber has pores, which have dimensions of the order of 10-100 angstroms, which inference is based on the observation that one sees Knudsen flow for oxygen and nitrogen. The fiber is also hydrophilic, with a high permeability for water vapor relative to its permeability to air.

### Example 2

The process of Example 1 was repeated with an ultra filtration fiber obtained from the Hydranautics Corporation. This fiber is commercially available, and is sold under the trademark HYDRACAP. The fiber has been used for water purification processes, and is categorized as a UF (ultra filtration) membrane of Hydranautics Corp. The fiber is made of polyether sulfone, instead of polysulfone. The fiber is quite large, having an outside diameter of 0.049 inches.

The fiber used in this Example is porous and hydrophilic, and has essentially no selectivity between oxygen and nitrogen. It has high water vapor permeability relative to its permeability to air. Its pores have a size of the order of 100 to 1000 angstroms.

The fibers used in this Example are initially impermeable to air with no discernible air dehydration properties. The fiber must first be flushed with pressurized water to remove the water-soluble pore filling material that is used in the storage of the fiber. Then the membrane can be air dried and tested for gas permeation properties. The water rinse step and air-drying step were therefore conducted prior to the step of coating the fiber with PVA. The steps in this Example were otherwise the same as described in Example 1.

For both Example 1 and Example 2, the fiber was made of a membrane formed from a hydrophilic polymer having relatively little or no selectivity between oxygen and nitrogen. Both polymers have a high permeability for water vapor compared to their permeability for air. The following Example describes the results of tests performed on modules made with the fibers produced in Examples 1 and 2, to evaluate their air dehydration properties.

### Example 3

Test devices were constructed to test the coated fibers described in Examples 1 and 2. The fibers were contained in copper tubing that was 38 inches long and 0.375 inches in diameter. The copper tubing had brass fittings at either end, with two fittings parallel to the module for connecting with the bore side of the fibers, and two fittings perpendicular to the fiber inset from tube sheets that connect to the shell-side of the fibers. Tube sheets at either end of the device were made with epoxy resins that, when cured, separated the bore side of the membranes from the shell- side. The latter arrangement allows for the isolated pressurization of either side of the membrane. The fibers made according to Example 1 had an outside diameter of 220 microns, and the test device used 180 fibers. These fibers are highly porous. The fibers used in Example 2 were much larger (having an outside diameter of 0.049 inches), and the test device contained only 6 such fibers. All test results are based on bore side pressurization and counter-current flow between the feed air and the resultant permeate flow. The following Table I summarizes the performance of the fiber used in Example 2. The table shows the results obtained when the fiber has been flushed with water and dried, as described above. In Test No. 1, there was no coating of PVA. A single coating of PVA was used in Test Nos. 2-5, and a double coating of PVA was used in Test Nos. 6-9.

**Table I**

| Fiber of Example 2, Evaluated at 100 psig with 75° F Pressure Dewpoint Air | | | | | |
|---|---|---|---|---|---|
| Test Number | Coating/Treatment | Permeate Flow | Permeate Atmospheric Dewpoint (°F) | Product Flow | Product Atmospheric Dewpoint (°F) |
| 1 | None | 1-2 cfm | 30 | 1-2 cfm | 30 |
| 2 | 4% PVA | 1.13 1pm | 53 | 7 1pm | -3 |
| 3 | 4% PVA | 1.18 1pm | 43.3 | 3.4 1pm | -9.5 |
| 4 | 4% PVA | 1.2 1pm | 36 | 2.25 1pm | -21 |
| 5 | 4% PVA+ 80° C for 5 hours | 1.5 1pm | 50 | 5.7 1pm | -3 |
| 6 | Second 4% PVA Coating | .32 1pm | 61 | 2.06 1pm | 0 |
| 7 | Second 4% PVA Coating | .33 1pm | 53 | 1.36 1pm | -23 |
| 8 | Second 4% PVA Coating | .33 1pm | 44 | .73 1pm | -54 |
| 9 | Second 4% PVA Coating | .33 1pm | Not tested | .52 1pm | < -64 |

Test No. 1 was conducted with a test device provided by Hydranautics Corporation, the device being about 9 inches long and containing about 25 fibers. Test No.1 was conducted at only 20 psig. The remaining tests shown in the table were conducted using the test device described in Example 3.

Table I shows that, without the PVA coating, the fiber did not exhibit any air dehydration properties. But the fiber that was coated exhibited a high degree of dehydration. The degree of dehydration was high with one coat, and even higher with two coats. In all cases the oxygen level in the product gas was 20.9%, indicating no selectivity between oxygen and nitrogen for this fiber. Note that Test No. 5 included coating with PVA plus heat treatment at 80° C for five hours.

The following Table II summarizes the performance of the fiber used in Example 1. Unlike the fiber used in Example 2, the fiber used in Example 1 was air permeable after the fiber fabrication process. In addition to PVA coatings, the fiber was tested with a coating of Triton X-100 to improve the air dehydration properties of the fiber. Triton X-100 is a non-ionic surfactant sold by Aldrich Chemical Company, under the product number 23,472-9. In the examples described herein, it was prepared in the form of a solution in water having a concentration of 150 ppm, and was coated in this form onto the fiber.

**Table II**

| Fiber of Example 1, Evaluated at 100 psig with 75° F Pressure Dewpoint Air | | | | | |
|---|---|---|---|---|---|
| Test Number | Coating/ Treatment | Permeate Flow (1pm) | Permeate Atmospheric Dewpoint (°F) | Product Flow (1pm) | Product Atmospheric Dewpoint (°F) |
| 1 | Triton X-100 (150 ppm) | 14 | 13 | 3 | < -64 |
| 2 | 4% PVA | 5,5 | 33 | 6.4 | < -64 |
| 3 | 4% PVA | 5.1 | 41.6 | 7.5 | -35 |
| 4 | 4% PVA + 80°C for 5 hours | 5.2 | Not tested | 7.6 | -37 |
| 5 | Second 4% PVA Coating | 6.2 | Not tested | 10.6 | < -64 |
| 6 | Second 4% PVA Coating | 5.7 | 40 | 12.8 | -36 |
| 7 | Second 4% PVA Coating | 5.4 | 22 | 11.3 | -54 |
| 8 | Second 4% PVA Coating + second 80°C for 5 hours | 5.2 | 45 | 12.5 | -30 |

Table II shows that both the Triton X-100 and the PVA coatings were effective in achieving excellent air dehydration properties. Oxygen levels in the dried product gas were measured to be in the range of about 21.6% to 21.9%, indicating that the air permeation was primarily due to knudsen flow, where the oxygen/nitrogen selectivity is about .92.

The following Table III compares the results obtained with air dehydration membranes of the present invention, with those obtained from commercially available dehydration membranes of the prior art. The efficiency and productivity of the air dehydration membranes made according to the present invention were compared with those of existing membrane dehydrators obtained from Hankison International. In particular, the air dehydration membranes of the present invention were compared with published data for the Hankison HMD20-2 module, operated at 100 psig with 80° F pressure dewpoint inlet air. The efficiency was defined as the ratio of the dry product gas flow to that of the inlet feed flow at various product dewpoints. The relative productivity is defined by the product flow rate for a given volume of device.

Since the test devices described above were smaller than the commercial devices, the test results were scaled to correspond to the size of the HMD20-2 device, which is 26.4 inches long and 2.1 inches in diameter. The scaling was done by taking a ratio of the fiber surface area in the test devices described above, to the surface area available to the fiber in the Hankison casing.

In comparing these devices, it was assumed that there was a 50% packing factor for the fiber, and that the inside casing diameter of the HMD20-2 device is about 1.7 inches, and that the active length of the fiber (i.e. the length of the module less the length of the tubesheets) was about 22 inches.

For the fiber made according to Example 2, with an outside diameter of 0.049 inches, one can fit 625 fibers into a module having a size comparable to that of the Hankison HMD20-2 module. Taking this fact into account, and also taking into account the change in length from 38 inches to 22 inches, one obtains a scaling factor for the flow of 60. For the fiber made according to Example 1, the calculated fiber count is 19500, which yields a scaling factor of 62 for estimated product flow for a module having a size similar to the HMD20-2 device.

**Table III**

| Comparison of Results of the Present Invention with Results Obtained from Commercially Available Hankison Membrane Dryers 100 psig, 80° F Pressure Dewpoint | | | | | | |
|---|---|---|---|---|---|---|
| Atm DP (°F) | Hankinson HMD20-2 Product Flow | Hankinson HMD20-2 Product Recovery | Coated Fiber from Ex.2 (Scaled Product Flow) | Coated Fiber from Ex. 2 (Product Recovery) | Coated Fiber from Ex. 1 (Scaled Product Flow) | Coated Fiber from Ex. 1 (Product Recovery) |
| 0 | 3.8 | 83% | 4.4 | 86.5% | | |
| -18 | 2.7 | 77% | 2.9 | 80.5% | | |
| -35 | 2 | 71% | | | 28 | 69% |
| -54 | 1.6 | 67% | 1.5 | 69% | 24.7 | 67.5% |
| < -64 | 1.4 | 66% | 1.1 | 61% | 23 | 63% |

The flows shown in Table III are in scfm. The first column shows the desired dewpoint. The flows used for the Hankison device are based on data provided by Hankison sales literature. The tests of the fiber made according to the present invention were scaled for meaningful comparison with a module having a size corresponding to the Hankison HMD20-2 product. The product recovery is the percentage of the feed flow that becomes dry product air.

Examination of Table III shows that the air dehydration membranes of the present invention, in all cases but one, yield results that are superior to those of the prior art. In particular, the membrane made according to Example 1 showed nearly the same product recovery percentages as the prior art, but had substantially greater product flow. The membrane made according to Example 2 showed product recovery percentages and product flows that were, in all cases but one, greater than that obtained from the prior art material. The only exception was the case where the desired dewpoint was < -64° F.

The following is a discussion of the physical mechanisms believed to underlie the operation of the dehydration membranes used in the present invention. However, the invention should not be deemed limited by the following explanation.

It is believed that air and water vapor pass through the dehydration membrane of the present invention by three different means.
For water vapor penetration, the relevant mechanisms are:
1) permeation through the dense polymer;
2) viscous flow through the pores; and
3) knudsen flow through the very fine pores.
The permeation through the dense polymer is believed to be the dominant factor for water vapor penetration.
For air penetration, the relevant mechanisms are:
1) permeation through the dense polymer;
2) viscous flow through the pores; and
3) knudsen flow through the very fine pores.

The permeation through the dense polymer is believed to be a minor factor. The viscous flow through the pores is believed to be the dominant factor for the fiber of Example 2, and the knudsen flow through the very fine pores is believed to be dominant for the fiber of Example 1.

It appears that the permeation through the dehydration membrane (either for water vapor or for air) is not greatly impacted by the coatings applied to the membrane. The viscous pore flow and the knudsen flow are lowered by the coatings, however. The coatings therefore serve to improve the dehydration properties of the membrane because the water vapor permeation is dominated by permeation through the dense polymer, which is unchanged by the coating, while the permeation of air is lowered because its rate is dependent on the viscous flow and knudsen flow which are both lowered by the coating, and since the permeation through the polymer is insignificant for air.

The present invention also comprises a non-cryogenic method and apparatus, which use the air dehydration membrane described above, in the separation of air into components. The Figure provides a schematic diagram showing the essential components of the system.

Ambient air is first compressed by air compressor 1. The compressed air is conveyed into receiver 2, which serves as a buffer between the compressor and the downstream components. The use of the receiver allows the compressor to be turned off briefly, without total loss of pressure in the line. A pressure relief valve 3 prevents unintentional build up of pressure in the receiver.

Moisture separator 4, and coarse and fine coalescing filters 5 and 6, removes liquid from the compressed air. The liquid to be removed is primarily water, but some liquid oil might also become entrained in the air stream, due to leakage from the compressor motor.

Heater 7, which is optional, raises the temperature of the compressed air, further drying it. Slow-opening valve 8, which may be manually or automatically operated, makes it possible to start the system slowly, avoiding a rapid build up of pressure. The valve is preferably one which requires many turns to open, thereby insuring that the pressure will build gradually.

At least some of the compressed and partially dried air then enters dehydration module 9. The essential component of the air dehydration module 9 is an air dehydration membrane, or a series of air dehydration membranes, having the composition described above. Note that the air dehydration membrane is not intended for removal of liquid water, but only removes water vapor or other vapors. Also, it is important to note that the air dehydration membrane is distinct from other membrane(s) used for air separation.

Like any membrane separation unit, the dehydration module defines a sweep gas and a low-pressure permeates gas. In the case of the dehydration membrane, the sweep gas is the relatively dried air, appearing at the output 10 of the dehydration module, and the permeate gas comprises air containing a relatively large proportion of water vapor, appearing at output 11, which in the present case is vented to the outside.

Permeated air or a secondary dry sweep stream may be used to optimize the dehydration process. If the membrane were totally efficient in water separation, all the water or water vapor in the feed stream would be removed, and there would be nothing to sweep it out of the system. As the process proceeds, the partial pressure of the water on the bore side becomes lower and lower, and the pressure on the shell-side becomes higher. This pressure difference tends to prevent additional water from being expelled from the module. Since the object is to make the bore side dry, the pressure difference interferes with the desired operation of the device. A sweep stream may therefore be used to remove the water or water vapor from the bore side, in part by absorbing some of the water, preventing recondensation, and in part by physically pushing the water out. The Figure therefore shows optional sweep gas recycling path 12, which enables some of the product sweep gas to be recombined with the permeate gas. In this case, the permeate gas comprises water vapor, plus whatever gas has passed through the membrane, plus the recycled sweep gas. The above-described recycling step thereby improves the efficiency of the air-drying process. Instead of recycling part of the sweep stream, one can provide the sweep gas from an external dry source.

In general, the degree of dehumidification will depend on the partial pressure ratio of water vapor across the dehydration membrane and on the product recovery (the ratio of product flow to feed flow). Better membranes have a high product recovery at low levels of product humidity and/or higher volumetric product flow rates.

Bypass line 13, connected around the air dehydration module, allows some of the compressed air to bypass the module. This arrangement means that only a portion of the air stream flows through the dehydration module. In practice, to protect the gas separation module, it is necessary to reduce the relative humidity only to about 70-90%, though a more preferred relative humidity would be 65% or less. Depending on its construction (i.e. the total effective area of the membrane etc.), the dehydration module is normally capable of producing air having much less humidity than the above. By adjusting the proportion of flow through the module 9 and the bypass line 13, one can produce a product having a desired level of humidity. By making the humidity level no lower than is really necessary, one can limit or reduce the number of component sub-modules required in the dehydration module.

Adjustment of the flow proportions discussed above is accomplished with valves 14 and 15. Valve 16 is used only to isolate the dehydration module from the upstream components, for purposes of maintenance. The dried compressed air from the dehydration module then passes through optional backpressure regulator 17, through carbon bed 18, and into the gas separation module 19. The backpressure regulator aids in controlling the flow rate of the process stream, and allows the carbon bed and the gas separation module to operate at a different, and lower, pressure from that of the upstream components. The backpressure regulator can be automatically controlled, to regulate the flow of dried compressed air into the gas separation module.

The carbon bed 18 removes oil vapor from the process stream.

The gas separation module 19 is a membrane system having an output comprising a nitrogen-enriched gas. The gas separation module also produces an oxygen-enriched permeate gas. As noted above, the gas separation membrane in module 19 is, in general, different from the air dehydration membrane in module 9.

The use of the air dehydration module described above, in the gas separation system of the present invention, allows operation at near ambient temperature. At these temperatures, the dehydration module will last longer and operate with typically 10-35% greater efficiency, depending on temperature and pressure, as defined by the amount of enriched-nitrogen product obtained relative to the quantity of feed air required. Since the air dehydration modules will typically purge 8-12% of the feed flow, the overall efficiency gain for the system typically will be 5-25%. This means that in a system using the air dehydration modules as a pre-treatment for air separation modules, one may use a smaller feed compressor, for many applications.

The reader skilled in the art will recognize that the invention can be modified in various ways. The dehydration membrane can be provided in various shapes and sizes. Materials other than those specifically described may be used, as long as they satisfy the physical criteria set forth above. These and other similar modifications should be deemed within the scope of the following claims.

## Claims

1. An air dehydration membrane comprising a hydrophilic polymer which has a permeability for water vapor greater than its permeability for air and shows low selectivity between oxygen and nitrogen, the polymer also having a hydrophilic coating, chosen such that the coating does not affect the selectivity of the coated membrane with respect to oxygen and nitrogen, but does increase selectivity of the membrane with respect to water vapor.

2. An air dehydration membrane according to Claim 1, wherein the hydrophilic polymer is selected from the group consisting of polysulfone and polyether sulfone.

3. An air dehydration membrane according to Claim 1 or 2, wherein the coating is selected from the group consisting of poly vinyl alcohol and Triton X-100.

4. A system for separation of air into components, comprising:
a) means (1) for compressing ambient air,
b) means (4) for removing liquid water from the compressed air, the removing means being connected to an output of the compressing means, and
c) a gas separation membrane (19), **characterized in that** the system includes an air dehydration membrane (9) according to any of Claims 1-3 for removing water vapor from the compressed air, the air dehydration membrane being connected to an output of the removing means, and to an input of the gas separation membrane.

5. A method of making an air dehydration membrane, comprising forming a polysulfone polymer into a hollow fiber, the fiber having a bore side and a shell side, coating the bore side of the fiber with a solution selected from the group consisting of poly vinyl alcohol and Triton X-100, and drying the coated fiber.

6. A method according to Claim 5, wherein the hollow fiber is formed by combining the polymer with a solvent and a non-solvent to form a spin dope, and extruding the spin dope.

7. A method according to Claim 6, wherein the solvent is n-methyl-pyrrolidinone, and the non-solvent is tri-ethylene glycol.

8. A method according to Claims 6 or 7, wherein the solvent and non-solvent are present in a ratio of about 2.0 to about 4.0 of solvent to non-solvent.

9. A method of separation of air into components, comprising:
a) compressing ambient air, to form a compressed air stream,
b) removing liquid water from the compressed air stream,
c) directing a dried compressed air stream into a gas separation membrane (19), and
d) withdrawing a nitrogen-enriched stream and an oxygen-enriched stream from the gas separation membrane, **characterized in that** the method includes passing the compressed air stream through an air dehydration membrane (9) to remove water vapor from the compressed air stream, said air dehydration membrane being made according to any of Claims 5 to 8.

10. A system for separation of air into components, comprising:
a) means (1) for compressing ambient air,
b) means (4) for removing liquid water from the compressed air, the removing means being connected to an output of the compressing means, and
c) a gas separation membrane (19) connected to an output of the removing means, **characterized in that** the system includes an air dehydration membrane (9) for removing water vapor from the compressed air, the air dehydration membrane being connected to an output of the removing means and to an input of the gas separation membrane.

11. A method of separation of air into components, comprising:
a) compressing ambient air, to form a compressed air stream,
b) removing liquid water from the compressed air stream,
c) directing a dried compressed air stream from the air dehydration membrane into a gas separation membrane (19), and
d) withdrawing a nitrogen-enriched stream and an oxygen-enriched stream from the gas separation membrane,
**characterized in that** the method includes passing the compressed air stream through an air dehydration membrane (9) which removes water vapor from the compressed air stream.
